# EUROPEAN PATENT APPLICATION

(11) **EP 4 654 687 A1**
(43) Date of publication of application: **26.11.2025**
(21) Application number: 23924569.9
(22) Date of filing: 28.02.2023
(51) Int. Cl.: H04W 64/00

(54) **POSITIONING METHOD AND APPARATUS**

(71) Applicant: Huawei Technologies Co., Ltd., Shenzhen, Guangdong 518129 (CN)
(72) Inventor: LI, Yanchun, Shenzhen, Guangdong 518129 (CN)
(74) Representative: MERH-IP Matias Erny Reichl Hoffmann Patentanwälte PartG mbB
(86) International application number: PCT/CN2023/078665
(87) International publication number: WO 2024/178594

(57) **Abstract**

This application relates to the field of communication technologies, and in particular, to a positioning method and an apparatus, to reduce complexity of positioning a terminal device in a scenario, for example, an ultra-wideband UWB scenario. The method includes: A network device separately sends first impulse signals to a terminal device in an impulse receiving time window of the terminal device on a plurality of antennas, where a plurality of sending delays of sending times at which the first impulse signals are respectively sent on the plurality of antennas relative to an initial sending time are different; the network device receives a first channel impulse response vector from the terminal device; the network device determines a transmission feature of the first impulse signal based on the plurality of sending delays and the first channel impulse response vector; and the network device positions the terminal device based on the transmission feature of the first impulse signal.

## Description

### TECHNICAL FIELD

This application relates to the field of communication technologies, and in particular, to a positioning method and an apparatus.

### BACKGROUND

Currently, a plurality of positioning technologies are supported in the communication field, including a time of arrival (time of arrival, ToA) positioning technology and a time difference of arrival (time difference of arrival, TDoA) positioning technology. The ToA positioning technology and the TDoA positioning technology are essentially the same. In both the ToA positioning technology and the TDoA positioning technology, positioning is implemented based on a basic principle of an electromagnetic wave signal propagation time, and at least two network devices are required for positioning of a terminal device. Consequently, application scenarios are limited.

A transmission feature, for example, an angle domain of a signal may be obtained by measuring channel impulse responses (channel impulse responses, CIRs) of a plurality of antennas, and positioning of a terminal device based on a single network device can be implemented by using angle domain information in combination with a signal propagation time. However, due to a limited size of the terminal device, the terminal device usually has only a single antenna. When the terminal device needs to obtain the channel impulse responses of the plurality of antennas, signals sent by a plurality of antennas of the network device need to be orthogonal. In this way, the signals from the plurality of antennas received by a single receive antenna of the terminal device may be orthogonally separated. However, for an ultra-wideband (ultra-wideband, UWB) system, a UWB signal is extended to an entire frequency domain, and it is difficult to implement frequency division orthogonality of the plurality of signals received by the terminal device. If the signals from the plurality of antennas are separated by using different signal waveforms, implementation complexity of a sender and a receiver is significantly increased. Therefore, how to reduce complexity of positioning a terminal device in a UWB scenario is a problem worth considering.

### SUMMARY

This application provides a positioning method and an apparatus, to reduce complexity of positioning a terminal device in a scenario, for example, a UWB scenario.

According to a first aspect, an embodiment of this application provides a positioning method. The method includes: A network device separately sends first impulse signals to a terminal device in an impulse receiving time window of the terminal device on a plurality of antennas, where a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal; the network device receives a first channel impulse response vector from the terminal device, where the first channel impulse response vector is determined by the terminal device based on the first impulse signals respectively sent by the plurality of antennas; the network device determines a transmission feature of the first impulse signal based on the plurality of sending delays and the first channel impulse response vector; and the network device positions the terminal device based on the transmission feature of the first impulse signal. Optionally, the transmission feature of the first impulse signal includes one or two of an angle of departure and a channel delay of the first impulse signal.

According to the foregoing method, the sending delays of the plurality of antennas of the network device is controlled in the impulse receiving time window of the terminal device, so that first sub-channel impulse response vectors respectively corresponding to the antennas of the network device may be separated in an aliased first channel impulse response vector determined by the terminal device, to obtain the transmission feature, for example, the angle of departure of the first impulse signal, thereby implementing positioning of the terminal device. In addition, signals from a plurality of antennas do not need to be separated by using different signal waveforms or the like, so that complexity of positioning a terminal device in a scenario, for example, a UWB scenario, can be reduced.

In a possible design, that the network device determines the transmission feature of the first impulse signal based on the plurality of sending delays and the first channel impulse response vector includes: The network device determines, based on the plurality of sending delays and the first channel impulse response vector, the plurality of first sub-channel impulse response vectors of the terminal device that correspond to the plurality of antennas; and the network device determines the transmission feature of the first impulse signal based on the plurality of first sub-channel impulse response vectors of the terminal device that correspond to the plurality of antennas.

In the foregoing design, the network device may accurately separate, based on the plurality of sending delays in respectively sending the first impulse signals by the plurality of antennas of the network device, the first sub-channel impulse response vectors respectively corresponding to the antennas of the network device in the aliased first channel impulse response vector determined by the terminal device, to obtain, through calculation, the transmission feature, for example, the angle of departure of the first impulse signal, thereby improving positioning precision.

In a possible design, before the network device separately sends the first impulse signals to the terminal device in the impulse receiving time window of the terminal device on the plurality of antennas, the method further includes: The network device determines, based on second channel impulse response vectors of second impulse signals respectively received by the plurality of antennas from the terminal device, times of strong-path delays respectively corresponding to the plurality of antennas; and the network device determines the plurality of sending delays based on the times of the strong-path delays respectively corresponding to the plurality of antennas. Optionally, the method further includes: The network device sends the plurality of sending delays to the terminal device.

In the foregoing design, the sending delay may be actively controlled based on reciprocity between uplink and downlink channels, to avoid overlapping of main paths in channel impulse responses from a plurality of antennas, thereby improving positioning precision.

In a possible design, before the network device separately sends the first impulse signals to the terminal device in the impulse receiving time window of the terminal device on the plurality of antennas, the method further includes: The network device receives second impulse signals from the terminal device on the plurality of antennas. That the network device separately sends the first impulse signals to the terminal device in the impulse receiving time window of the terminal device on the plurality of antennas may include the following two manners.

Manner 1: The network device determines, based on a first time at which any one of the plurality of antennas receives the second impulse signal, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and the network device separately sends the first impulse signals to the terminal device on the plurality of antennas based on the second times at which the plurality of antennas respectively send the first impulse signals to the terminal device.

Manner 2: The network device determines, based on first times at which the plurality of antennas respectively receives the second impulse signals, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and the network device separately sends the first impulse signals to the terminal device on the plurality of antennas based on the second times at which the plurality of antennas respectively send the first impulse signals to the terminal device.

In a possible design, the first channel impulse response vector is determined by the terminal device based on the first impulse signals that are respectively sent by the plurality of antennas and that are received in all of a plurality of sampling intervals, and the plurality of sampling intervals are determined based on the plurality of sending delays.

In the foregoing design, the terminal device may feed back the first channel impulse response vector only based on the first impulse signals received in the plurality of sampling intervals, so that overheads of feeding back the first channel impulse response vector can be reduced.

In a possible design, the first channel impulse response vector is determined by the terminal device based on some first impulse signals whose signal amplitudes are greater than or equal to an amplitude threshold in the first impulse signals respectively sent by the plurality of antennas.

In the foregoing design, the terminal device may feed back the first channel impulse response vector based on only some first impulse signals whose signal amplitudes are greater than or equal to the amplitude threshold in the first impulse signals, so that overheads of feeding back the first channel impulse response vector can be reduced.

In a possible design, a plurality of sending delays used by the network device to separately send first impulse signals to a plurality of terminal devices on the plurality of antennas in impulse receiving time windows of the terminal devices are different.

In the foregoing design, in the impulse receiving time windows of the plurality of terminal devices, the plurality of used sending delays are different, so that a more accurate transmission feature can be obtained through active and opportunistic avoidance, thereby improving positioning precision.

According to a second aspect, an embodiment of this application provides a positioning method. The method includes: A terminal device receives a plurality of first impulse signals from a network device, where the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal; the terminal device determines a first channel impulse response vector based on the plurality of first impulse signals; and the terminal device sends the first channel impulse response vector to the network device.

In a possible design, the method further includes: The terminal device sends a second impulse signal to the network device.

In a possible design, that the terminal device determines the first channel impulse response vector based on the plurality of first impulse signals includes: The terminal device determines the first channel impulse response vector based on the plurality of first impulse signals received in all of a plurality of sampling intervals, where the plurality of sampling intervals are determined based on the plurality of sending delays.

In a possible design, the method further includes: The terminal device receives the plurality of sending delays from the network device.

In a possible design, that the terminal device determines the first channel impulse response vector based on the plurality of first impulse signals includes: The terminal device determines the first channel impulse response vector based on some first impulse signals whose signal amplitudes are greater than or equal to an amplitude threshold in the plurality of received first impulse signals.

According to a third aspect, an embodiment of this application provides a positioning method. The method includes: A network device determines a first impulse signal; and the network device separately sends first impulse signals to a terminal device in an impulse receiving time window of the terminal device on a plurality of antennas, where a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal.

In a possible design, before the network device separately sends the first impulse signals to the terminal device in the impulse receiving time window of the terminal device on the plurality of antennas, the method further includes: The network device determines, based on second channel impulse response vectors of second impulse signals respectively received by the plurality of antennas from the terminal device, times of strong-path delays respectively corresponding to the plurality of antennas; and the network device determines the plurality of sending delays based on the times of the strong-path delays respectively corresponding to the plurality of antennas.

In a possible design, before the network device separately sends the first impulse signals to the terminal device in the impulse receiving time window of the terminal device on the plurality of antennas, the method further includes: The network device receives second impulse signals from the terminal device on the plurality of antennas. That the network device separately sends the first impulse signals to the terminal device in the impulse receiving time window of the terminal device on the plurality of antennas may include the following two manners.

Manner 1: The network device determines, based on a first time at which any one of the plurality of antennas receives the second impulse signal, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and the network device separately sends the first impulse signals to the terminal device on the plurality of antennas based on the second times at which the plurality of antennas respectively send the first impulse signals to the terminal device.

Manner 2: The network device determines, based on first times at which the plurality of antennas respectively receives the second impulse signals, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and the network device separately sends the first impulse signals to the terminal device on the plurality of antennas based on the second times at which the plurality of antennas respectively send the first impulse signals to the terminal device.

In a possible design, the method further includes: The network device sends the plurality of sending delays to the terminal device.

According to a fourth aspect, an embodiment of this application provides a positioning method. The method includes: A terminal device receives a plurality of first impulse signals from a network device, where the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal; the terminal device determines a first channel impulse response vector based on the plurality of first impulse signals; the terminal device determines a transmission feature of the first impulse signal based on the plurality of sending delays and the first channel impulse response vector; and the terminal device positions the terminal device based on the transmission feature of the first impulse signal. Optionally, the transmission feature of the first impulse signal includes one or two of an angle of departure and a channel delay of the first impulse signal.

In a possible design, the method further includes: The terminal device sends a second impulse signal to the network device.

In a possible design, that the terminal device determines the transmission feature of the first impulse signal based on the plurality of sending delays and the first channel impulse response vector includes: The terminal device determines, based on the plurality of sending delays and the first channel impulse response vector, a plurality of first sub-channel impulse response vectors of the terminal device that correspond to the plurality of antennas; and the terminal device determines the transmission feature of the first impulse signal based on the plurality of first sub-channel impulse response vectors of the terminal device that correspond to the plurality of antennas.

In a possible design, the method further includes: The terminal device receives the plurality of sending delays from the network device.

According to a fifth aspect, an embodiment of this application provides a communication apparatus. The apparatus has a function of implementing the method in the first aspect or the third aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a processor. The processor may be configured to be coupled to a memory, and the memory is configured to store instructions executed by the processor. When the instructions are executed by the processor, the apparatus may perform the method in the first aspect or the third aspect. "Coupling" means that two components are directly or indirectly connected or have a specific communication relationship.

In a possible design, the apparatus may be an entire network device.

According to a sixth aspect, an embodiment of this application provides a communication apparatus. The apparatus has a function of implementing the method in the second aspect or the fourth aspect. The function may be implemented by using hardware, or may be implemented by using hardware executing corresponding software. The hardware or software includes one or more modules corresponding to the function, for example, includes an interface unit and a processing unit.

In a possible design, the apparatus may be a chip or an integrated circuit.

In a possible design, the apparatus includes a processor. The processor may be configured to be coupled to a memory, and the memory is configured to store instructions executed by the processor. When the instructions are executed by the processor, the apparatus may perform the method in the second aspect or the fourth aspect. "Coupling" means that two components are directly or indirectly connected or have a specific communication relationship.

In a possible design, the apparatus may be an entire terminal device.

According to a seventh aspect, an embodiment of this application provides a communication apparatus. The communication apparatus includes an interface circuit and a processor, and the processor and the interface circuit are coupled to each other. The processor is configured to implement the method in the first aspect or the third aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, store input data required for running instructions by the processor, or store data generated after the processor runs instructions. The memory may be a physically independent unit, or may be coupled to the processor, or the processor includes the memory.

According to an eighth aspect, an embodiment of this application provides a communication apparatus. The communication apparatus includes an interface circuit and a processor, and the processor and the interface circuit are coupled to each other. The processor is configured to implement the method in the second aspect or the fourth aspect by using a logic circuit or by executing instructions. The interface circuit is configured to receive a signal from a communication apparatus other than the communication apparatus and transmit the signal to the processor, or send a signal from the processor to a communication apparatus other than the communication apparatus. It can be understood that the interface circuit may be a transceiver, a transceiver machine, a transceiver, or an input/output interface.

Optionally, the communication apparatus may further include a memory, configured to: store instructions executed by the processor, store input data required for running instructions by the processor, or store data generated after the processor runs instructions. The memory may be a physically independent unit, or may be coupled to the processor, or the processor includes the memory.

According to a ninth aspect, an embodiment of this application provides a positioning system, including a network device and a terminal device. The network device is configured to implement the method in the first aspect, and the terminal device is configured to implement the method in the second aspect. Alternatively, the network device is configured to implement the method in the third aspect, and the terminal device is configured to implement the method in the fourth aspect.

According to a tenth aspect, an embodiment of this application provides a computer-readable storage medium. The computer-readable storage medium stores a computer program or instructions. When the computer program or the instructions are executed by a processor, the method in the first aspect, the second aspect, the third aspect, or the fourth aspect can be implemented.

According to an eleventh aspect, an embodiment of this application further provides a computer program product, including a computer program or instructions. When the computer program or the instructions are executed by a processor, the method in the first aspect, the second aspect, the third aspect, or the fourth aspect can be implemented.

According to a twelfth aspect, an embodiment of this application further provides a chip system. The chip system includes a processor. The processor is configured to be coupled to a memory, and the memory is configured to store a program or instructions. When the program or the instructions are executed by the processor, the method in the first aspect, the second aspect, the third aspect, or the fourth aspect can be implemented.

For technical effect that can be achieved in the second aspect to the twelfth aspect, refer to technical effect that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of ranging according to an embodiment of this application;
FIG. 3 is a diagram of a ranging error caused by overlapping multipath according to an embodiment of this application;
FIG. 4 is a diagram 1 of a positioning method according to an embodiment of this application;
FIG. 5 is a diagram of transmission of an impulse signal according to an embodiment of this application;
FIG. 6 is a diagram in which an antenna 1 of a network device receives a second channel impulse response corresponding to a second impulse signal according to an embodiment of this application;
FIG. 7 is a diagram of an impulse response according to an embodiment of this application;
FIG. 8 is a diagram of incident angle calculation according to an embodiment of this application;
FIG. 9 is a diagram of positioning a terminal device according to an embodiment of this application;
FIG. 10 is a diagram of strong-path superposition between antennas in different sending delays according to an embodiment of this application;
FIG. 11 is a diagram 2 of a positioning method according to an embodiment of this application;
FIG. 12 is a diagram 1 of a structure of a communication apparatus according to an embodiment of this application; and
FIG. 13 is a diagram 2 of a structure of a communication apparatus according to an embodiment of this application.

### DESCRIPTION OF EMBODIMENTS

The technical solutions in embodiments of this application may be applied to various communication systems, for example, a long term evolution (long term evolution, LTE) system, a universal mobile telecommunications system (universal mobile telecommunications system, UMTS), a worldwide interoperability for microwave access (worldwide interoperability for microwave access, WiMAX) communication system, a 5^{th} generation (5^{th} generation, 5G) mobile communication system, or a new radio (new radio, NR) system. The technical solutions provided in this application may be further applied to a future communication system, for example, a 6^{th} generation mobile communication system. Alternatively, the communication system may be a device-to-device (device-to-device, D2D) network, a Wi-Fi network, a machine-to-machine (machine-to-machine, M2M) network, an internet of things (internet of things, IoT) network, or another network.

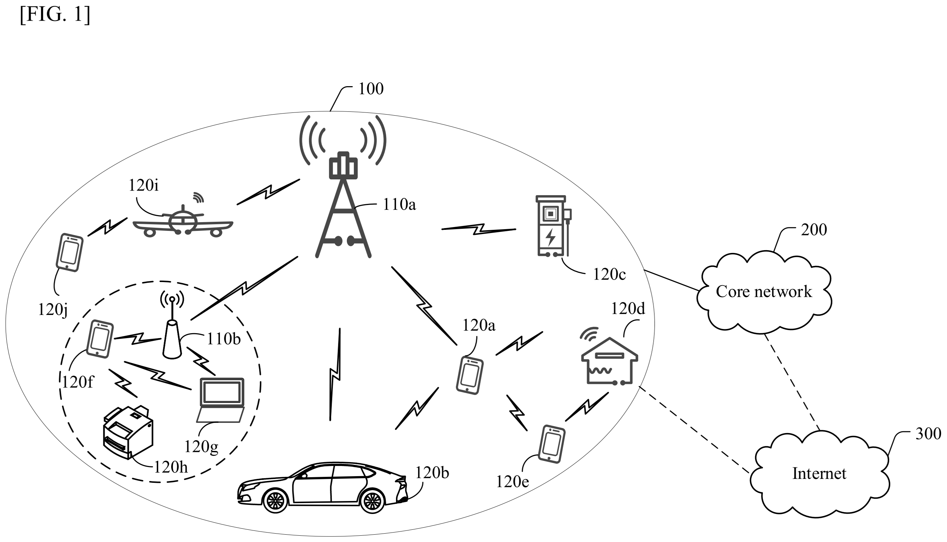

An architecture of the communication system to which embodiments of this application are applied may be shown in FIG. 1. The communication system includes a radio access network 100 and a core network 200. Optionally, the communication system may further include an internet 300. The radio access network 100 may include at least one network device, for example, 110a and 110b in FIG. 1, and may further include at least one terminal device, for example, 120a to 120j in FIG. 1. 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. A same terminal device or network device may provide different functions in different application scenarios. For example, mobile phones in FIG. 1 include 120a, 120e, 120f, and 120j. The mobile phone 120a may access the base station 110a, be connected to the vehicle 120b, directly communicate with the mobile phone 120e, and access the HAP. The mobile phone 120b may access the HAP and directly communicate with the mobile phone 120a. The mobile phone 120f may access the micro base station 110b, be connected to the notebook computer 120g, and be connected to the printer 120h. The mobile phone 120j may control the uncrewed aerial vehicle 120i.

The terminal device is connected to the network device, and the network device is connected to the core network. A core network device and the network device may be different physical devices independent of each other; functions of a core network device and logic functions of the network device may be integrated into a same physical device; or some functions of a core network device and some functions of the network device may be integrated into one physical device. Terminal devices may be connected to each other in a wired or wireless manner, and network devices may be connected to each other in a wired or wireless manner. FIG. 1 is merely a diagram. The communication system may further include another device, for example, may further include a wireless relay device and a wireless backhaul device. This is not shown in FIG. 1.

The network device may also be referred to as a radio access network device, and may be a base station (base station), an evolved NodeB (evolved NodeB, eNodeB), a transmission reception point (transmission reception point, TRP), a next generation NodeB (next generation NodeB, gNB) in a 5^{th} generation (5^{th} generation, 5G) mobile communication system, a base station in a future mobile communication system, an access node in a Wi-Fi system, or the like; or may be a module or unit that completes some functions of a base station, for example, may be a central unit (central unit, CU) or a distributed unit (distributed unit, DU). The CU herein completes functions of a radio resource control protocol and a packet data convergence protocol (packet data convergence protocol, PDCP) of a base station, and may further complete a function of a service data adaptation protocol (service data adaptation protocol, SDAP). The DU completes functions of a radio link control layer and a medium access control (medium access control, MAC) layer of a base station, and may further complete functions of some or all of physical layers. For specific descriptions of the foregoing protocol layers, refer to technical specifications related to a 3^{rd} generation partnership project (3^{rd} generation partnership project, 3GPP). The network device may be a macro base station (for example, 110a in FIG. 1), may be a micro base station or an indoor base station (for example, 110b in FIG. 1), or may be a relay node, a donor node, or the like. A specific technology and a specific device form that are used by the network device are not limited in embodiments of this application.

The terminal device may also be referred to as a terminal, user equipment (user equipment, UE), a mobile station, a mobile terminal, or the like. The terminal device may be widely used in various scenarios, for example, D2D, vehicle to everything (vehicle to everything, V2X) communication, machine-type communication (machine-type communication, MTC), IoT, virtual reality, augmented reality, industrial control, self-driving, telemedicine, a smart grid, smart furniture, a smart office, smart wearable, smart transportation, and a smart city. The terminal device may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal device are not limited in embodiments of this application.

The network device and the terminal device may be at fixed locations or may be movable. The network device and the terminal device may be deployed on land including indoors or outdoors in a handheld or vehicle-mounted manner, may be deployed on water, or may be deployed in the air on an airplane, a balloon, or an artificial satellite. Application scenarios of the network device and the terminal device are not limited in embodiments of this application.

Roles of the network device and the terminal device may be relative. For example, a helicopter or an uncrewed aerial vehicle 120i in FIG. 1 may be configured as a mobile network device. For the terminal device 120j that accesses the radio access network 100 through 120i, the terminal device 120i is a network device. However, for the network device 110a, 120i is a terminal device, that is, 110a and 120i communicate with each other by using a wireless air interface protocol. Certainly, 110a and 120i may alternatively communicate with each other by using an interface protocol between network devices. In this case, for 110a, 120i is also a network device. Therefore, the network device and the terminal device may be collectively referred to as a communication apparatus. 110a and 110b in FIG. 1 may be referred to as a communication apparatus with a function of a network device, and 120a to 120j in FIG. 1 may be referred to as a communication apparatus with a function of a terminal device.

Communication between a network device and a terminal device, between network devices, or between terminal devices may be performed by using a licensed spectrum, an unlicensed spectrum, or both a licensed spectrum and an unlicensed spectrum; or may be performed by using a spectrum below 6 gigahertz (gigahertz, GHz), a spectrum above 6 GHz, or both a spectrum below 6 GHz and a spectrum above 6 GHz. A spectrum resource used for wireless communication is not limited in embodiments of this application.

In embodiments of this application, a function of a network device may alternatively be performed by a module (for example, a chip) in the network device, or may be performed by a control subsystem that has the function of the network device. The control subsystem that has the function of the network device may be a control center in the foregoing application scenarios such as a smart grid, industrial control, smart transportation, and a smart city. A function of a terminal device may alternatively be performed by a module (for example, a chip or a modem) in the terminal device, or may be performed by an apparatus that has the function of the terminal device.

For ease of understanding by a person skilled in the art, before embodiments of this application are described, some terms in this application are first described.
(1) Line of sight (line of sight, LoS) and non-line of sight (non-line of sight, NLoS) means line-of-sight transmission and non-line-of-sight transmission of wireless signals.

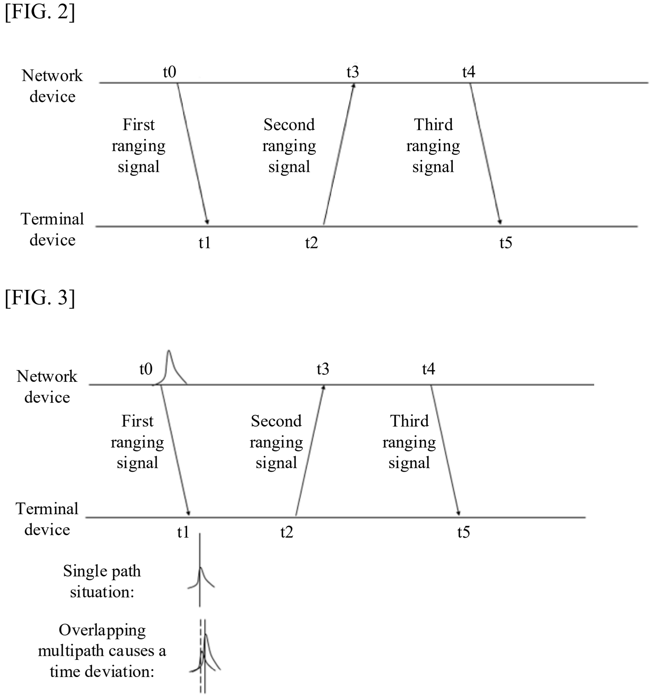

(1) Two-way ranging (two-way ranging, TWR) or time-of-flight (time-of-flight)-based ranging is a method for measuring a distance between two devices based on duration required for transmitting a signal between the two devices once. For example, the two devices are a network device and a terminal device respectively. Refer to a diagram of ranging shown in FIG. 2. The network device may send a first ranging signal to the terminal device, and record a time t0 at which the first ranging signal is sent. When receiving the first ranging signal sent by the network device, the terminal device records a time t1 at which the first ranging signal is received, and then the terminal device may return, to the network device, a second ranging signal that carries t1, and record a time t2 at which the second ranging signal is sent. When receiving the second ranging signal, the network device records a time t3 at which the second ranging signal is received. After sending the second ranging signal, the terminal device may further send t2 to the network device by using another signal. The network device may obtain a one-way signal propagation time T_1trip (or referred to as a one-way time of flight) between the network device and the terminal device based on ((t3-t0)-(t2-t1))/2. In addition, a distance between the network device and the terminal device may be determined based on S=T_1trip*SpeedofLight, where S indicates the distance between the network device and the terminal device, T_1trip is duration required for transmitting a signal between the network device and the terminal device once, and SpeedofLight is a propagation speed of the signal (the signal is an electromagnetic wave signal, and the propagation speed is usually a speed of light).

Because the network device and the terminal device are two different devices, clock asynchronization between the two devices causes an estimation deviation of T_1trip. Therefore, an improved method is to enable one of the network device and the terminal device to send a ranging signal at least twice. As shown in FIG. 2, the network device may send a third ranging signal, the network device records a time t4 at which the third ranging signal is sent, and the terminal device records a time t5 at which the third ranging signal is received. When the two devices are perfectly synchronized and locations of the two devices basically remain unchanged, t4-t0 is equal to t5-t1. Otherwise, a clock rate difference may be compensated through calculation. For example, T_1trip=[(t3-t0)-(t2-t1)*(t4-t0)/(t5-t1)]/2.

(3) ToA positioning technology: In the ToA positioning technology, a location of a terminal device is determined through measurement of distances between the terminal device and a plurality of network devices. After obtaining the distances from the terminal device to the plurality of network devices, the terminal device may estimate the location of the terminal device through triangular geometric calculation or the like. A triangular geometry calculation principle is that a plane may be determined by three points a, b, and c that are not collinear in space, and after distances between a 4^{th} point d and the three points a, b, and c are determined, a possible point d may be determined both above and below the plane determined by the points a, b, and c, or a possible point d may be determined in the plane determined by the points a, b, and c. The triangular geometry calculation principle is commonly used for satellite positioning. Three satellites operate in space, the earth is always located below a plane determined by the three satellites, and a target to be positioned on the earth is also located below the plane determined by the three satellites. A location of the target can be determined based on distances between the target and the three satellites.

(4) TDoA positioning technology: In the TDoA positioning technology, a location of a terminal device is determined through measurement of transmission delay differences between the terminal device and a plurality of network devices. For example, the plurality of network devices are three network devices. A distance difference R21=R2-R1 between a distance R1 between the terminal device and a network device 1 and a distance R2 between the terminal device and a network device 2 may be calculated based on a difference between a time of arrival from the terminal device to the network device 1 and a time of arrival from the terminal device to the network device 2. Similarly, a distance difference R31=R3-R1 between the distance R1 between the terminal device and the network device 1 and a distance R3 between the terminal device and a network device 3 may be calculated based on a difference between a time of arrival from the terminal device to the network device 1 and a time of arrival from the terminal device to the network device 3. In this case, the terminal device is located on a hyperbolic line 1 that uses the network device 1 and the network device 2 as focuses and on which a difference between distances from the terminal device to the two focuses is always R21, and is also located on a hyperbolic line 2 that uses the network device 1 and the network device 3 as focuses and on which a difference between distances from the terminal device to the two focuses is always R31. In other words, the terminal device is located at an intersection point of the hyperbolic line 1 and the hyperbolic line 2.

It can be learned that the ToA positioning technology and the TDoA positioning technology need participation of at least three network devices. If there are less than three network devices in an environment, positioning of a terminal device cannot be implemented. Currently, a transmission feature, for example, an angle domain of a signal may be obtained by measuring channel impulse responses (channel impulse responses, CIRs) of a plurality of antennas, and positioning of a terminal device based on a single network device can be implemented by using angle domain information in combination with a signal propagation time. However, due to a limited size of the terminal device, the terminal device usually has only a single antenna. When the terminal device needs to obtain the channel impulse responses of the plurality of antennas, signals sent by a plurality of antennas of the network device need to be orthogonal. In this way, the signals from the plurality of antennas received by a single receive antenna of the terminal device may be orthogonally separated.

However, for a UWB system, a UWB signal is extended to an entire frequency domain, and it is difficult to implement frequency division orthogonality of the plurality of signals received by the terminal device. If the signals from the plurality of antennas are separated by using different signal waveforms, implementation complexity of a sender and a receiver is significantly increased. Therefore, how to reduce complexity of positioning a terminal device in a scenario, for example, a UWB scenario, is a problem worth considering. In view of this, this application provides a positioning method and an apparatus, to reduce complexity of positioning a terminal device in a scenario, for example, a UWB scenario.

In addition, ranging in a current positioning method depends on an accurate arrival timestamp mark (for example, t1, t3, and t5 in FIG. 2). The timestamp is affected by overlapping multipath. This may cause a time deviation and a positioning error. For example, a network device sends a first ranging signal at a moment t0, and a terminal device estimates a time of arrival t1 by receiving the first ranging signal. Refer to FIG. 3. When the first ranging signal reaches the terminal device through an NLoS path other than a LoS path, a delay of the NLoS path is greater than a delay of the LoS path. When an extra delay of the NLoS path compared to the LoS path is not significantly greater than a time resolution of a system (a direct time resolution may be 1/BW, and BW indicates a bandwidth (bandwidth)), responses of the NLoS path and the LoS path are aliased. This affects an amplitude of a local response of the LoS path. Overlapping multipath causes a time deviation, for example, a deviation from a dashed line location to a solid line, resulting in an inaccurate time stamp t1 and a positioning error. In embodiments of this application, parameter extraction may be further performed on a delay domain, to compensate for a deviation, thereby further improving positioning precision. The following describes in detail embodiments of this application with reference to the accompanying drawings.

In addition, it should be understood that ordinal numbers such as "first" and "second" mentioned in embodiments of this application are used to distinguish between a plurality of objects, and are not intended to limit sizes, content, an order, a time sequence, priorities, or importance degrees of the plurality of objects. For example, a first ranging signal and a second ranging signal do not indicate different priorities, importance degrees, or the like corresponding to the two ranging signals.

In embodiments of this application, unless otherwise specified, a quantity of nouns indicates "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" usually indicates an "or" relationship between the associated objects. For example, A/B indicates A or B. "At least one of the following items (pieces)" or a similar expression thereof indicates any combination of these items, including a single item (piece) or any combination of a plurality of items (pieces). For example, at least one item (piece) of a, b, or c indicates a, b, c, a and b, a and c, b and c, or a, b, and c, where a, b, and c may be singular or plural.

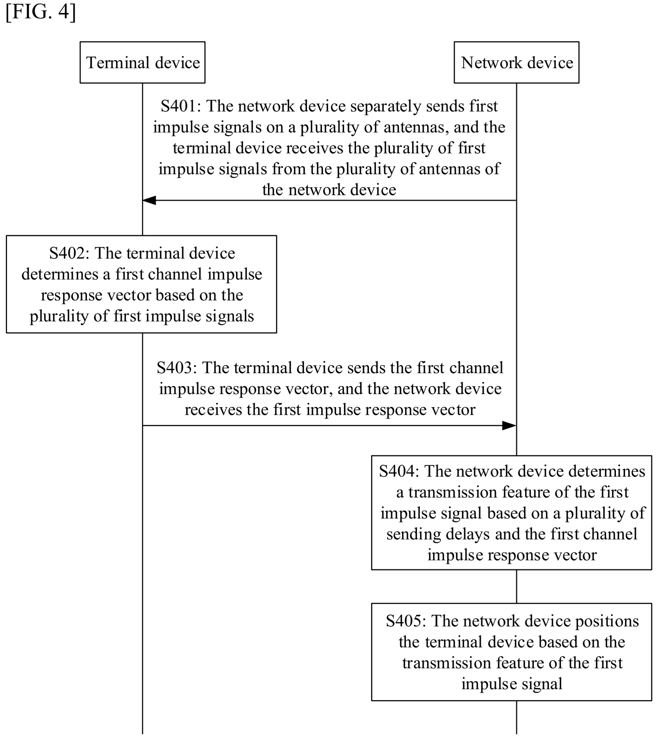

FIG. 4 is a diagram of a positioning method according to an embodiment of this application. The method includes the following steps.

S401: A network device separately sends first impulse signals to a terminal device in an impulse receiving time window of the terminal device on a plurality of antennas, and correspondingly, the terminal device receives the plurality of first impulse signals from the plurality of antennas of the network device.

A plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal.

S402: The terminal device determines a first channel impulse response vector based on the plurality of first impulse signals.

In this embodiment of this application, the network device may control the sending delays of sending the first impulse signals (for example, UWB impulse signals) by the plurality of antennas, so that the terminal device can receive the plurality of first impulse signals from the plurality of antennas of the network device in the impulse receiving time window (for example, a CIR maximum coherent cumulative receiving window of the terminal device), to obtain the first channel impulse response vector of delay aliasing of the plurality of antennas.

For example, the network device separately sends first impulse signals to the terminal device by using six antennas (an antenna 1 to an antenna 6), and a sequence of sending the first impulse signals by the six antennas is the antenna 1, the antenna 2, the antenna 3, the antenna 4, the antenna 5, and the antenna 6. A sending time at which the antenna 1 sends the first impulse signal is an initial sending time t. Sending delays of sending times at which the antenna 1, the antenna 2, the antenna 3, the antenna 4, the antenna 5, and the antenna 6 send the first impulse signals relative to the initial sending time t are respectively Δt₁₋₁, Δt₂₋₁, Δt₃₋₁, Δt₄₋₁, Δt₅₋₁, and Δt₆₋₁, where Δt₆₋₁>Δt₅₋₁>Δt₄₋₁>Δt₃₋₁>Δt₂₋₁, and Δt₁₋₁ is 0. A single antenna of the terminal device receives the first impulse signals respectively sent by the six antennas (the antenna 1 to the antenna 6) of the network device, and can obtain a first channel impulse response vector corresponding to delay aliasing of the six antennas of the network device, that is, can obtain a multi-input single-output (multi-input single-output, MISO) channel impulse response vector CIR_sum corresponding to a plurality of antenna inputs of the network device and a single antenna output of the terminal device.

In a possible implementation, the network device may determine the plurality of sending delays based on a preconfigured or preset delay interval Δt. The foregoing example in which the network device separately sends the first impulse signals to the terminal device by using the six antennas (the antenna 1 to the antenna 6) is still used. In this case, Δt₁₋₁ may be 0 (that is, 0Δt), Δt₂₋₁ may be Δt, Δt₃₋₁ may be 2Δt, Δt₄₋₁ may be 3Δt, Δt₅₋₁ may be 4Δt, and Δt₆₋₁ may be 5Δt.

In another possible implementation, the network device may alternatively determine the plurality of sending delays based on second channel impulse response vectors of second impulse signals respectively received by the plurality of antennas from the terminal device.

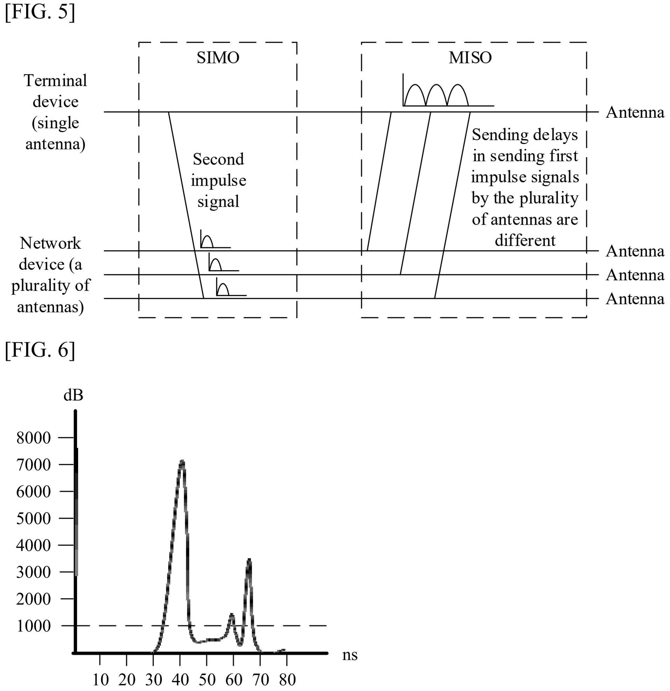

Refer to a diagram of transmission of an impulse signal shown in FIG. 5. The single-antenna terminal device may send the second impulse signal. The plurality of antennas of the network device receive the second impulse signal from the terminal device, to obtain second channel impulse responses respectively corresponding to the plurality of antennas, and the second channel impulse response vectors respectively corresponding to the plurality of antennas may be arranged side by side to form a single-input multi-output (single-input multi-output, SIMO) channel impulse response matrix H_simo corresponding to a single antenna input of the terminal device and a plurality of antenna outputs of the network device. The network device may determine, based on the second channel impulse response vectors (or H_simo) respectively corresponding to the plurality of antennas, times of strong-path delays respectively corresponding to the plurality of antennas, and may determine the plurality of sending delays based on the times of the strong-path delays respectively corresponding to the plurality of antennas.

The foregoing example in which the network device separately sends the first impulse signals to the terminal device by using the six antennas (the antenna 1 to the antenna 6) is still used. If a second channel impulse response that corresponds to a second impulse signal and that is received by the antenna 1 of the network device is shown in FIG. 6, a horizontal axis in FIG. 6 indicates a time in a unit of nanosecond (ns), a vertical axis indicates an amplitude in a unit of decibel (dB), a second channel impulse response vector corresponding to the antenna 1 is 0, 0, 0, 0, 0, 100, 1500, 7200, 600, 700, 1400, 3500, 100, and 0, a sampling period is 5 ns, and a strong-path impact threshold is 1000, it can be learned that there is an interval of four sampling periods between a peak value 7200 of the second channel impulse response vector and a last amplitude of 3500 greater than 1000 after the peak value, that is, a time of a strong-path delay is 20 ns. In this case, it may be determined that Δt₂₋₁ may be 20 ns.

In some implementations, in a scenario in which the network device and the terminal device simultaneously perform TWR, time-of-flight-based ranging, or the like, after receiving an impulse signal (the second impulse signal is used as an example) for ranging and the like from the terminal device, the network device may alternatively feed back the second impulse signal to the terminal device based on preset feedback delays respectively corresponding to the plurality of antennas, for example, separately send first impulse signals to the terminal device on the plurality of antennas.

Because locations of the plurality of antennas of the network device are different, first times at which the plurality of antennas of the network device receive the second impulse signals from the terminal device may be different. In a possible implementation, the network device may determine, based on a first time at which any one of the plurality of antennas receives the second impulse signal and the feedback delays respectively corresponding to the plurality of antennas, second times at which the plurality of antennas respectively send the first impulse signals to the terminal device, for example, determine, based on the first time and a sum of the feedback delays respectively corresponding to the plurality of antennas, the second times at which the plurality of antennas respectively send the first impulse signals to the terminal device, and separately send the first impulse signals to the terminal device on the plurality of antennas based on the second times respectively corresponding to the plurality of antennas.

In another possible implementation, the network device may alternatively determine, based on the first times at which the plurality of antennas respectively receive the second impulse signals, and the feedback delays respectively corresponding to the plurality of antennas, second times at which the plurality of antennas respectively send the first impulse signals to the terminal device, and separately send the first impulse signals to the terminal device on the plurality of antennas based on the second times respectively corresponding to the plurality of antennas.

It should be understood that, setting of the feedback delays respectively corresponding to the plurality of antennas needs to meet that a maximum difference between the second times at which the plurality of antennas respectively send the first impulse signals to the terminal device and that are determined based on the feedback delays respectively corresponding to the plurality of antennas and the first time at which any one of the plurality of antennas of the network device receives the second impulse signal or the first times at which the plurality of antennas of the network device respectively receive the second impulse signals is less than or equal to duration of the impulse receiving time window of the terminal device, to ensure that the terminal device can receive, within duration of one impulse receiving time window, the first impulse signals separately sent by the network device to the terminal device on the plurality of antennas.

S403: The terminal device sends the first channel impulse response vector to the network device, and correspondingly, the network device receives the first impulse response vector from the terminal device.

The single antenna of the terminal device receives the first impulse signals respectively sent by the plurality of antennas of the network device, and can obtain, based on the received first impulse signals, the first channel impulse response vector corresponding to delay aliasing of the plurality of antennas of the network device, namely, the MISO channel impulse response vector CIR_sum. After obtaining the first channel impulse response vector corresponding to delay aliasing of the plurality of antennas of the network device, the terminal device may send the obtained first channel impulse response vector to the network device.

In a possible implementation, to simplify feedback content and reduce signaling overheads, when obtaining (or determining) the first channel impulse response vector, the terminal device may determine the first channel impulse response vector based on a plurality of first impulse signals received in all of a plurality of sampling intervals, where the plurality of sampling intervals are determined based on the plurality of sending delays.

The foregoing example in which the network device separately sends the first impulse signals to the terminal device by using the six antennas (the antenna 1 to the antenna 6) is still used. If a time length of any sampling interval is d, a sampling interval 1 in which the antenna 1 sends the first impulse signal to the terminal device is [0, d], and a sampling interval 2 in which the antenna 2 sends the first impulse signal to the terminal device is [Δt₂₋₁, Δt₂₋₁+d], a sampling interval 3 in which the antenna 3 sends the first impulse signal to the terminal device is [Δt₃₋₁, Δt₃₋₁+d], a sampling interval 4 in which the antenna 4 sends the first impulse signal to the terminal device is [Δt₄₋₁, Δt₄₋₁+d], and a sampling interval 5 in which the antenna 5 sends the first impulse signal to the terminal device is [Δt₅₋₁, Δt₅₋₁+d], a sampling interval 6 in which the antenna 6 sends the first impulse signal to the terminal device is [Δt₆₋₁, Δt₆₋₁+d]. It should be understood that the sampling interval may also be referred to as a response interval of a main path. In the foregoing example, times in the sampling interval 1 to the sampling interval 6 are delays relative to an initial sampling time that is of the terminal device and at which the network device sends the first impulse signals to the terminal device by using the six antennas (the antenna 1 to the antenna 6). The initial sampling time of the terminal device may be determined based on a time of a first peak value that is of the first impulse signal of the terminal device and that is greater than a sampling threshold, or determined based on a time at which the first impulse signal is received, or the like. For example, the time of the first peak value greater than the sampling threshold is t2, and the initial sampling time of the terminal device is t2-d/2. That is, a sampling time corresponding to the sampling interval 1 is t2-d/2(t2-d/2+0) to t2+d/2(t2-d/2+d). The plurality of sending delays may be sent by the network device to the terminal device, or may be pre-agreed or pre-negotiated by the network device and the terminal device.

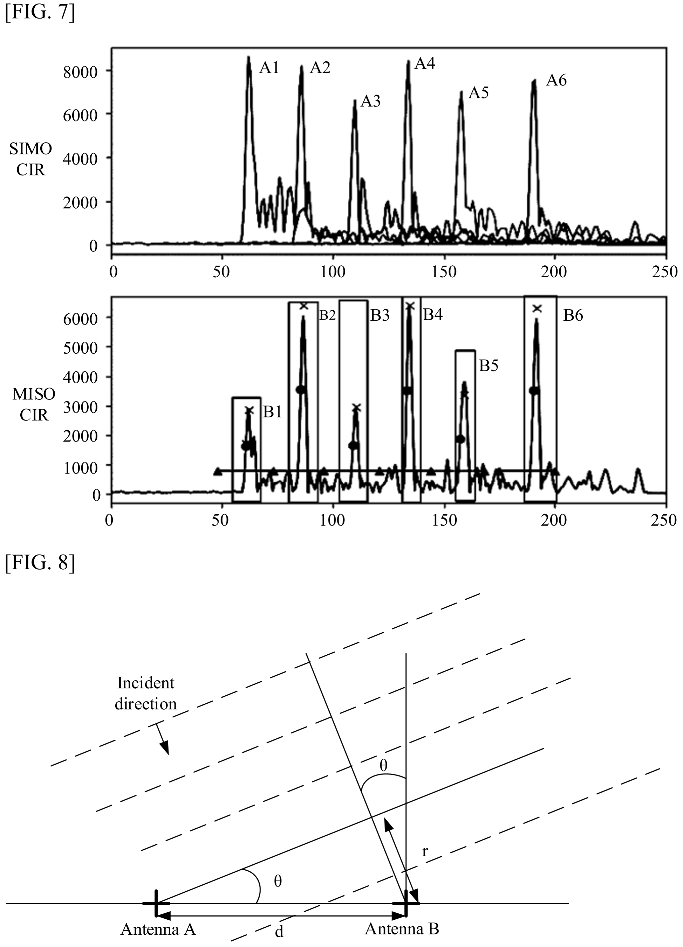

An example in which the network device separately sends the first impulse signals to the terminal device by using six antennas (an antenna 1 to an antenna 6), a sequence of sending the first impulse signals by the six antennas is the antenna 1, the antenna 2, the antenna 3, the antenna 4, the antenna 5, and the antenna 6, a sending time at which the antenna 1 sends the first impulse signal is an initial sending time t, and sending delays of sending times at which the antenna 1, the antenna 2, the antenna 3, the antenna 4, the antenna 5, and the antenna 6 send the first impulse signals relative to the initial sending time t are respectively Δt₁₋₁, Δt₂₋₁, Δt₃₋₁, Δt₄₋₁, Δt₅₋₁, and Δt₆₋₁ is still used. Refer to a diagram of an impulse response shown in FIG. 7. A horizontal axis in FIG. 7 indicates a time in a unit of ns, and a vertical axis indicates an amplitude in a unit of dB. An upper half diagram in FIG. 7 is a diagram in which the single-antenna terminal device sends the second impulse signal, and the six antennas (the antenna 1 to the antenna 6) of the network device receive the second impulse signal from the terminal device (that is, SIMO), to obtain second channel impulse responses that respectively correspond to the plurality of antennas and that are superimposed based on the sending delays respectively corresponding to the six antennas. A lower half diagram in FIG. 7 is a diagram in which the single antenna of the terminal device receives the first impulse signals respectively sent by the six antennas of the network device (that is, MISO), to obtain a first channel impulse response corresponding to delay aliasing of the six antennas of the network device. In the upper half diagram of FIG. 7, A1 to A6 respectively indicate the second channel impulse responses that are of the second impulse signal and that are received by the antenna 1 to the antenna 6 of the network device, and the second channel impulse responses that are of the second impulse signal and that are received by the antenna 2 to the antenna 6 are respectively added with the sending delays Δt₁₋₁, Δt₂₋₁, Δt₃₋₁, Δt₄₋₁, Δt₅₋₁, and Δt₆₋₁, to compare and observe the second channel impulse responses with the first channel impulse response corresponding to delay aliasing of the six antennas of the network device in the lower half diagram of FIG. 7. B1 to B6 in the lower half diagram of FIG. 7 respectively indicate first sub-channel impulse responses of the first impulse signals that are sent by the antenna 1 to the antenna 6 of the network device and that are received by the terminal device, and B1 to B6 are aliased as the first channel impulse response. The terminal device may feed back, to the network device based on sampling intervals respectively corresponding to the six antennas, a channel impulse response vector (that is, a first channel impulse response vector) corresponding to CIR segments included in black boxes in the lower half figure, to reduce signaling overheads.

In another possible implementation, to simplify feedback content and reduce signaling overheads, when the terminal device obtains (or determines) the first channel impulse response vector, the terminal device may determine the first channel impulse response vector based on some first impulse signals whose signal amplitudes are greater than or equal to an amplitude threshold in the plurality of received first impulse signals. In an example, refer to the lower half diagram in FIG. 7. The terminal device may determine the first channel impulse response vector based on some first impulse signals whose signal amplitudes are greater than or equal to the amplitude threshold (for example, greater than or equal to 300, 400, or another amplitude threshold) in the plurality of aliased first impulse signals (namely, the first channel impulse response that is of antenna delay aliasing and that corresponds to the plurality of first impulse signals).

S404: The network device determines a transmission feature of the first impulse signal based on the plurality of sending delays and the first channel impulse response vector.

The network device receives the first channel impulse response vector from the terminal device, and may divide the first channel impulse response vector into a plurality of segments with reference to the plurality of sending delays corresponding to the plurality of antennas, to obtain a plurality of first sub-channel impulse response vectors corresponding to the plurality of antennas.

In a possible implementation, based on reciprocity between uplink and downlink channels, the network device may alternatively cancel, through successive interference cancellation (successive interference cancellation, SIC) based on the second channel impulse response vectors that respectively correspond to the plurality of antennas and that are obtained by receiving the second impulse signal by the plurality of antennas from the terminal device and the plurality of sending delays corresponding to the plurality of antennas, interference caused by a prior sending antenna to a posterior sending antenna in the first channel impulse response vector, to obtain first sub-channel impulse response vectors respectively corresponding to the plurality of antennas. In addition, the first sub-channel impulse response vectors respectively corresponding to the plurality of antennas may be arranged side by side to form a MISO channel impulse response matrix H_miso.

The network device may obtain the transmission feature, for example, an angle of departure and a channel delay of the first impulse signal through calculation based on the first sub-channel impulse response vectors (namely, H_miso) respectively corresponding to the plurality of antennas.

Refer to FIG. 8. For an incident angle θ of an incident impulse signal, namely, an angle θ between the incident impulse signal and the plurality of antennas (namely, an antenna array) of the network device, it can be learned that sin (θ)=r/d, where d is a distance between an antenna A and an antenna B, and r is a distance over which the incident impulse signal needs to be transmitted to the antenna B after reaching the antenna A. If a phase difference between the antenna A and the antenna B in impulse signal receiving is φ, r=λφ/2π, where λ is a wavelength of the incident impulse signal, and the incident angle θ of the impulse signal may be calculated based on r and d. Similarly, in this embodiment of this application, the network device may determine a phase difference between any two antennas in impulse signal transmitting based on the first sub-channel impulse response vectors respectively corresponding to the plurality of antennas, and obtain the angle of departure of the first impulse signal through calculation with reference to a distance between the two antennas and a wavelength of the first impulse signal.

In addition, the network device may further determine, based on the first channel impulse response vector, a time of arrival at which the first impulse signal arrives at the terminal device. For example, the time of arrival at which the first impulse signal arrives at the terminal device may be determined based on a power delay feature of a projection of the first channel impulse response vector on the angle of departure of the first impulse signal in a (relative) delay-angle spectrum of the first channel impulse response vector. The channel delay may be obtained based on a difference between the time of arrival and the sending time of the first impulse signal. The channel delay may be calculated by using a sending time that is based on a receiver (for example, the terminal device) and that is obtained by compensating for a difference in synchronization between a sending clock and a receiving clock.

S405: The network device positions the terminal device based on the transmission feature of the first impulse signal.

When the transmission feature includes the angle of departure of the first impulse signal, the network device may determine an orientation of the terminal device relative to the network device with reference to orientations or directions of the plurality of antennas of the network device and the angle of departure of the first impulse signal, to implement positioning of the terminal device.

In an example, the directions of the plurality of antennas of the network device are the same as a Y-axis (north) direction, and the angle of departure of the first impulse signal is θ. In this case, the network device may determine that the terminal device is in a direction of θ north by west of the network device.

In a possible implementation, the network device may alternatively position the terminal device based on the angle of departure of the first impulse signal and a distance between the network device and the terminal device.

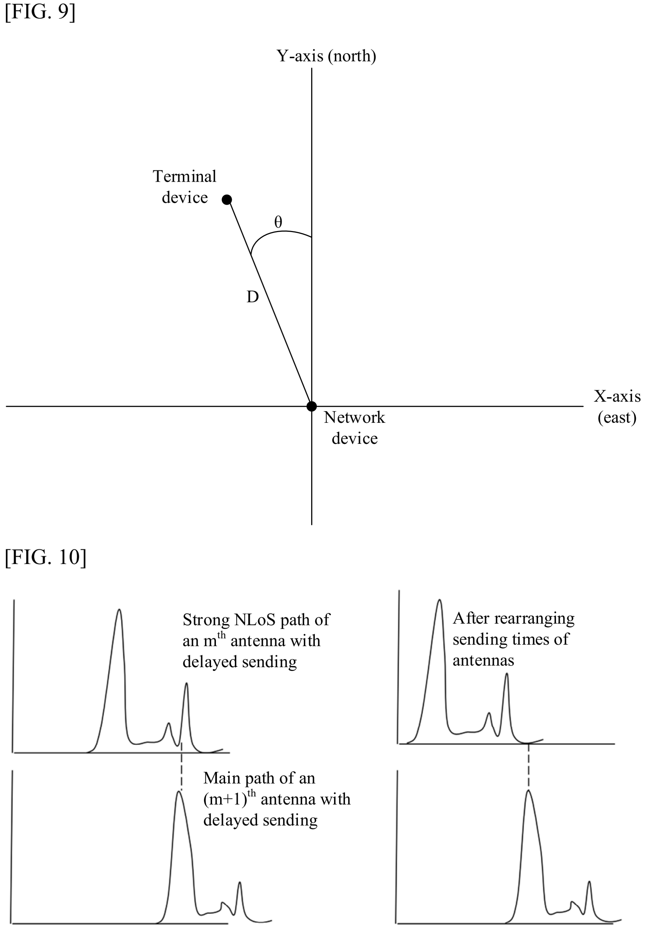

In an example, refer to a diagram of positioning shown in FIG. 9. Directions of the plurality of antennas of the network device are the same as a Y-axis (north) direction, and the angle of departure of the first impulse signal is θ. In this case, the network device may determine that the terminal device is in a direction of θ north by west of the network device, and with reference to a distance D between the network device and the terminal device, the network device may determine that the terminal device is D away from the network device in the direction of θ north to west of the network device. The distance D between the network device and the terminal device may be shown in the ranging method shown in FIG. 2. Optionally, to reduce signaling overheads, the second impulse signal, the first impulse signal, and the like transmitted between the network devices may also be used as ranging signals, for example, the first ranging signal and the second ranging signal in FIG. 2, and are used for ranging between the network device and the terminal device.

When the transmission feature includes the channel delay of the first impulse signal, the network device may alternatively correct, based on the channel delay, a ranging deviation (or a deviation of a time of transmitting a ranging signal between the network device and the terminal device) caused by overlapping multipath between the network device and the terminal device, for example, correct, based on a distance between the network device and the terminal device determined based on the channel delay, a distance between the network device and the terminal device measured based on a time of flight, and position the terminal device based on a corrected distance. For example, a location of the terminal device is determined based on locations of a plurality of network devices and corrected distances between the network devices and the terminal device. Alternatively, a location of the terminal device relative to the network device is determined based on the corrected distance and the angle of departure of the first impulse signal, and a location of the terminal device may be determined with reference to a location of the network device.

In addition, in this embodiment of this application, the network device may further use a plurality of different sending delays on the plurality of antennas in impulse receiving time windows of a plurality of terminal devices, to change times or a sequence of sending the first impulse signals by the plurality of antennas and reduce impact and a probability of strong-path superposition between different antennas, thereby obtaining a more accurate transmission feature and improving positioning precision. As shown in FIG. 10, by using different sending delays, a probability that a strong path of an m^{th} antenna with delayed sending is repeatedly superimposed on a main path of an (m+1)^{th} antenna with delayed sending may be actively reduced.

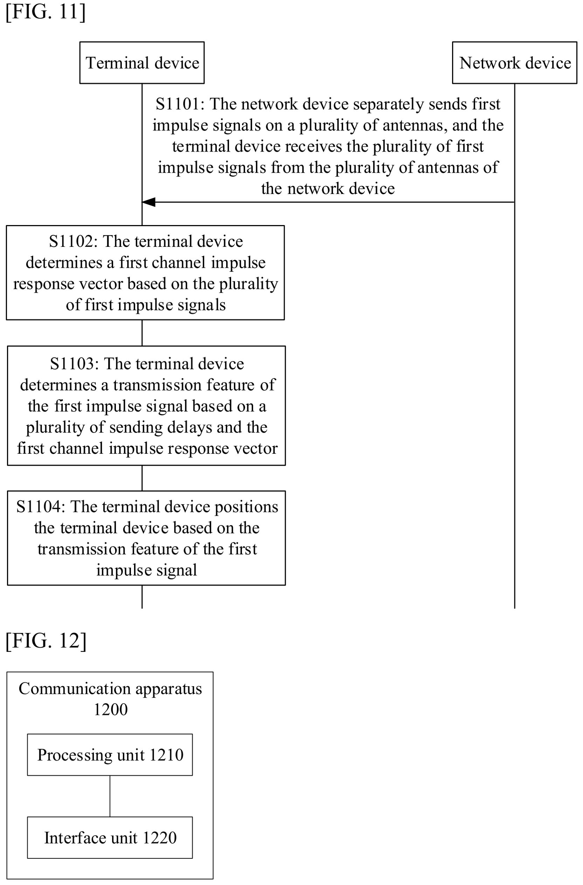

The positioning method shown in FIG. 4 is mainly described from a perspective of positioning processing performed by the network device. It may be understood that positioning processing may alternatively be implemented by the terminal device. FIG. 11 is a diagram of another positioning method according to an embodiment of this application. The method includes the following steps.

S1101: A network device separately sends first impulse signals to a terminal device in an impulse receiving time window of the terminal device on a plurality of antennas, and correspondingly, the terminal device receives the plurality of first impulse signals from the plurality of antennas of the network device.

A plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal.

S1102: The terminal device determines a first channel impulse response vector based on the plurality of first impulse signals.

S1103: The terminal device determines a transmission feature of the first impulse signal based on the plurality of sending delays and the first channel impulse response vector.

S1104: The terminal device positions the terminal device based on the transmission feature of the first impulse signal.

Implementations of S1101 to S1104 are similar to implementations of S401 to S405. A difference between the positioning method shown in FIG. 11 and the positioning method shown in FIG. 4 lies in that in FIG. 11, the terminal device determines the transmission feature of the first impulse signal based on the plurality of sending delays and the first channel impulse response vector, and the terminal device is positioned by the terminal device instead of being positioned by the network device. For specific implementation of S1101 to S1104, refer to the implementation of S401 to S405. Details are not described again.

It may be understood that, to implement the functions in the foregoing embodiments, the terminal device and the network device include corresponding hardware structures and/or software modules for performing the functions. A person skilled in the art should be easily aware that, in combination with the units and the method steps in the examples described in embodiments disclosed in this application, this application can be implemented by using hardware or a combination of hardware and computer software. Whether a function is performed by hardware or hardware driven by computer software depends on specific application scenarios and design constraints of the technical solutions.

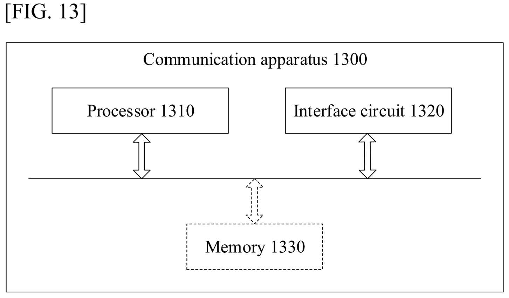

FIG. 12 and FIG. 13 are diagrams of structures of possible communication apparatuses according to embodiments of this application. The communication apparatuses may be configured to implement functions of the terminal device and the network device in the foregoing method embodiments, and therefore can also achieve beneficial effect of the foregoing method embodiments. In a possible implementation, the communication apparatus may be a terminal device or a network device, or may be a module (for example, a chip) used in a terminal device or a network device.

As shown in FIG. 12, the communication apparatus 1200 includes a processing unit 1210 and an interface unit 1220, and the interface unit 1220 may also be a transceiver unit or an input/output interface. The communication apparatus 1200 may be configured to implement the functions of the terminal device and the network device in the method embodiments shown in FIG. 4 or FIG. 11.

When the communication apparatus 1200 is configured to implement the function of the network device in the method embodiments shown in FIG. 4,
the interface unit 1220 is configured to: separately send first impulse signals to a terminal device in an impulse receiving time window of the terminal device on a plurality of antennas, where a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal; and receive a first channel impulse response vector from the terminal device, where the first channel impulse response vector is determined by the terminal device based on the first impulse signals respectively sent by the plurality of antennas; and the processing unit 1210 is configured to: determine a transmission feature of the first impulse signal based on the plurality of sending delays and the first channel impulse response vector; and position the terminal device based on the transmission feature of the first impulse signal.

In a possible design, the transmission feature of the first impulse signal may include but is not limited to one or two of an angle of departure and a channel delay of the first impulse signal.

In a possible design, when determining the transmission feature of the first impulse signal based on the plurality of sending delays and the first channel impulse response vector, the processing unit 1210 is specifically configured to: determine, based on the plurality of sending delays and the first channel impulse response vector, a plurality of first sub-channel impulse response vectors of the terminal device that correspond to the plurality of antennas; and determine the transmission feature of the first impulse signal based on the plurality of first sub-channel impulse response vectors of the terminal device that correspond to the plurality of antennas.

In a possible design, before the interface unit 1220 separately sends the first impulse signals to the terminal device in the impulse receiving time window of the terminal device on the plurality of antennas, the processing unit 1210 is further configured to: determine, based on channel impulse response vectors that are of a second impulse signal and that are separately received by the plurality of antennas from the terminal device, times of strong-path delays respectively corresponding to the plurality of antennas; and determine the plurality of sending delays based on the times of the strong-path delays respectively corresponding to the plurality of antennas.

In a possible design, the interface unit 1220 is further configured to receive second impulse signals from the terminal device on the plurality of antennas. When separately sending the first impulse signals to the terminal device in the impulse receiving time window of the terminal device on the plurality of antennas, the interface unit 1220 is specifically configured to: determine, based on a first time at which any one of the plurality of antennas receives the second impulse signal, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and separately send the first impulse signals to the terminal device on the plurality of antennas based on the second times at which the plurality of antennas respectively send the first impulse signals to the terminal device; or determine, based on first times at which the plurality of antennas respectively receives the second impulse signals, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and separately send the first impulse signals to the terminal device on the plurality of antennas based on the second times at which the plurality of antennas respectively send the first impulse signals to the terminal device.

In a possible design, the first channel impulse response vector is determined by the terminal device based on the first impulse signals that are respectively sent by the plurality of antennas and that are received in all of a plurality of sampling intervals, and the plurality of sampling intervals are determined based on the plurality of sending delays.

In a possible design, the interface unit 1220 is further configured to send the plurality of sending delays to the terminal device.

In a possible design, the first channel impulse response vector may be determined by the terminal device based on some first impulse signals whose signal amplitudes are greater than or equal to an amplitude threshold in the first impulse signals respectively sent by the plurality of antennas.

In a possible design, a plurality of sending delays used by the interface unit 1220 to separately send first impulse signals to a plurality of terminal devices on the plurality of antennas in impulse receiving time windows of the terminal devices are different.

When the communication apparatus 1200 is configured to implement the function of the terminal device in the method embodiments shown in FIG. 4,

the interface unit 1220 is configured to receive a plurality of first impulse signals from a network device, where the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal; the processing unit 1210 is configured to determine a first channel impulse response vector based on the plurality of first impulse signals; and the interface unit 1220 is further configured to send the first channel impulse response vector to the network device.

In a possible design, the interface unit 1220 is further configured to send a second impulse signal to the network device.

In a possible design, when determining the first channel impulse response vector based on the plurality of first impulse signals, the processing unit 1210 is specifically configured to determine the first channel impulse response vector based on the plurality of first impulse signals received in all of a plurality of sampling intervals, where the plurality of sampling intervals are determined based on the plurality of sending delays.

In a possible design, the interface unit 1220 is further configured to receive the plurality of sending delays from the network device.

In a possible design, when determining the first channel impulse response vector based on the plurality of first impulse signals, the processing unit 1210 is specifically configured to determine the first channel impulse response vector based on some first impulse signals whose signal amplitudes are greater than or equal to an amplitude threshold in the plurality of received first impulse signals.

When the communication apparatus 1200 is configured to implement the function of the network device in the method embodiments shown in FIG. 11,

the processing unit 1210 is configured to determine a first impulse signal; and the interface unit 1220 is configured to separately send first impulse signals to a terminal device in an impulse receiving time window of the terminal device on a plurality of antennas, where a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal.

In a possible design, before the interface unit 1220 separately sends the first impulse signals to the terminal device in the impulse receiving time window of the terminal device on the plurality of antennas, the processing unit 1210 is further configured to: determine, based on channel impulse response vectors that are of a second impulse signal and that are separately received by the plurality of antennas from the terminal device, times of strong-path delays respectively corresponding to the plurality of antennas; and determine the plurality of sending delays based on the times of the strong-path delays respectively corresponding to the plurality of antennas.

In a possible design, the interface unit 1220 is further configured to receive second impulse signals from the terminal device on the plurality of antennas. When separately sending the first impulse signals to the terminal device in the impulse receiving time window of the terminal device on the plurality of antennas, the interface unit 1220 is specifically configured to: determine, based on a first time at which any one of the plurality of antennas receives the second impulse signal, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and separately send the first impulse signals to the terminal device on the plurality of antennas based on the second times at which the plurality of antennas respectively send the first impulse signals to the terminal device; or determine, based on first times at which the plurality of antennas respectively receives the second impulse signals, and feedback delays respectively corresponding to the plurality of antennas, second times at which the plurality of antennas respectively send the first impulse signals to the terminal device, where a maximum difference between the second times at which the plurality of antennas respectively send the first impulse signals to the terminal device is less than or equal to duration of the impulse receiving time window of the terminal device; and separately send the first impulse signals to the terminal device on the plurality of antennas based on the second times at which the plurality of antennas respectively send the first impulse signals to the terminal device.

In a possible design, the interface unit 1220 is further configured to send the plurality of sending delays to the terminal device.

When the communication apparatus 1200 is configured to implement the function of the terminal device in the method embodiments shown in FIG. 11,

the interface unit 1220 is configured to receive a plurality of first impulse signals from a network device, where the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal; and the processing unit 1210 is configured to: determine a first channel impulse response vector based on the plurality of first impulse signals; determine a transmission feature of the first impulse signal based on the plurality of sending delays and the first channel impulse response vector; and position the terminal device based on the transmission feature of the first impulse signal.

In a possible design, the transmission feature of the first impulse signal includes one or two of an angle of departure and a channel delay of the first impulse signal.

In a possible design, when determining the transmission feature of the first impulse signal based on the plurality of sending delays and the first channel impulse response vector, the processing unit 1210 is specifically configured to: determine, based on the plurality of sending delays and the first channel impulse response vector, a plurality of first sub-channel impulse response vectors of the terminal device that correspond to the plurality of antennas; and determine the transmission feature of the first impulse signal based on the plurality of first sub-channel impulse response vectors of the terminal device that correspond to the plurality of antennas.

In a possible design, the interface unit 1220 is further configured to send a second impulse signal to the network device.

In a possible design, the interface unit 1220 is further configured to receive the plurality of sending delays from the network device.

As shown in FIG. 13, an embodiment of this application further provides the communication apparatus 1300, including a processor 1310 and an interface circuit 1320. The processor 1310 and the interface circuit 1320 are coupled to each other. It may be understood that the interface circuit 1320 may be a transceiver, an input/output interface, an input interface, an output interface, a communication interface, or the like. Optionally, the communication apparatus 1300 may further include a memory 1330 configured to store instructions executed by the processor 1310, input data required by the processor 1310 to run instructions, or data generated after the processor 1310 runs instructions. Optionally, the memory 1330 may alternatively be integrated with the processor 1310.

When the communication apparatus 1300 is configured to implement the method shown in FIG. 4 or FIG. 11, the processor 1310 may be configured to implement a function of the processing unit 1210, and the interface circuit 1320 may be configured to implement a function of the interface unit 1220.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general-purpose processor may be a microprocessor or any conventional processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of the embodiments may be implemented in a form of computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape, may be an optical medium, for example, a digital video disc, or may be a semiconductor medium, for example, a solid-state disk. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logic relationship thereof, to form a new embodiment.

In addition, it should be understood that in embodiments of this application, the term "for example" is used to give an example, an illustration, or a description. Any embodiment or design scheme described as an "example" in this application should not be explained as being more preferred or having more advantages than another embodiment or design scheme. Exactly, the term "example" is used to present a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A positioning method, comprising:
separately sending, by a network device, first impulse signals to a terminal device in an impulse receiving time window of the terminal device on a plurality of antennas, wherein a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal;
receiving, by the network device, a first channel impulse response vector from the terminal device, wherein the first channel impulse response vector is determined by the terminal device based on the first impulse signals respectively sent by the plurality of antennas;
determining, by the network device, a transmission feature of the first impulse signal based on the plurality of sending delays and the first channel impulse response vector; and
positioning, by the network device, the terminal device based on the transmission feature of the first impulse signal.

2. The method according to claim 1, wherein the transmission feature of the first impulse signal comprises one or two of an angle of departure and a channel delay of the first impulse signal.

3. The method according to claim 1 or 2, wherein determining, by the network device, the transmission feature of the first impulse signal based on the plurality of sending delays and the first channel impulse response vector comprises:
determining, by the network device based on the plurality of sending delays and the first channel impulse response vector, a plurality of first sub-channel impulse response vectors of the terminal device that correspond to the plurality of antennas; and
determining, by the network device, the transmission feature of the first impulse signal based on the plurality of first sub-channel impulse response vectors of the terminal device that correspond to the plurality of antennas.

4. The method according to any one of claims 1 to 3, wherein before separately sending, by the network device, the first impulse signals to the terminal device in the impulse receiving time window of the terminal device on the plurality of antennas, the method further comprises:
determining, by the network device based on second channel impulse response vectors of second impulse signals respectively received by the plurality of antennas from the terminal device, times of strong-path delays respectively corresponding to the plurality of antennas; and
determining, by the network device, the plurality of sending delays based on the times of the strong-path delays respectively corresponding to the plurality of antennas.

5. The method according to any one of claims 1 to 3, wherein before separately sending, by the network device, the first impulse signals to the terminal device in the impulse receiving time window of the terminal device on the plurality of antennas, the method further comprises:
receiving, by the network device, second impulse signals from the terminal device on the plurality of antennas; and
separately sending, by the network device, the first impulse signals to the terminal device in the impulse receiving time window of the terminal device on the plurality of antennas comprises:
determining, by the network device based on a first time at which any one of the plurality of antennas receives the second impulse signal, and feedback delays respectively corresponding to the plurality of antennas, second times at which the plurality of antennas respectively send the first impulse signals to the terminal device, wherein a maximum difference between the second times at which the plurality of antennas respectively send the first impulse signals to the terminal device is less than or equal to duration of the impulse receiving time window of the terminal device; and separately sending, by the network device, the first impulse signals to the terminal device on the plurality of antennas based on the second times at which the plurality of antennas respectively send the first impulse signals to the terminal device; or
determining, by the network device based on first times at which the plurality of antennas respectively receives the second impulse signals, and feedback delays respectively corresponding to the plurality of antennas, second times at which the plurality of antennas respectively send the first impulse signals to the terminal device, wherein a maximum difference between the second times at which the plurality of antennas respectively send the first impulse signals to the terminal device is less than or equal to duration of the impulse receiving time window of the terminal device; and separately sending, by the network device, the first impulse signals to the terminal device on the plurality of antennas based on the second times at which the plurality of antennas respectively send the first impulse signals to the terminal device.

6. The method according to any one of claims 1 to 5, wherein the first channel impulse response vector is determined by the terminal device based on the first impulse signals that are respectively sent by the plurality of antennas and that are received in all of a plurality of sampling intervals, and the plurality of sampling intervals are determined based on the plurality of sending delays.

7. The method according to claim 6, wherein the method further comprises:
sending, by the network device, the plurality of sending delays to the terminal device.

8. The method according to any one of claims 1 to 5, wherein the first channel impulse response vector is determined by the terminal device based on some first impulse signals whose signal amplitudes are greater than or equal to an amplitude threshold in the first impulse signals respectively sent by the plurality of antennas.

9. The method according to any one of claims 1 to 8, wherein a plurality of sending delays used by the network device to separately send first impulse signals to a plurality of terminal devices on the plurality of antennas in impulse receiving time windows of the terminal devices are different.

10. A positioning method, comprising:
receiving, by a terminal device, a plurality of first impulse signals from a network device, wherein the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal;
determining, by the terminal device, a first channel impulse response vector based on the plurality of first impulse signals; and
sending, by the terminal device, the first channel impulse response vector to the network device.

11. The method according to claim 10, wherein the method further comprises:
sending, by the terminal device, a second impulse signal to the network device.

12. The method according to claim 10 or 11, wherein determining, by the terminal device, the first channel impulse response vector based on the plurality of first impulse signals comprises:
determining, by the terminal device, the first channel impulse response vector based on the plurality of first impulse signals received in all of a plurality of sampling intervals, wherein the plurality of sampling intervals are determined based on the plurality of sending delays.

13. The method according to any one of claims 10 to 12, wherein the method further comprises:
receiving, by the terminal device, the plurality of sending delays from the network device.

14. The method according to claim 10 or 11, wherein determining, by the terminal device, the first channel impulse response vector based on the plurality of first impulse signals comprises:
determining, by the terminal device, the first channel impulse response vector based on some first impulse signals whose signal amplitudes are greater than or equal to an amplitude threshold in the plurality of received first impulse signals.

15. A positioning method, comprising:
receiving, by a terminal device, a plurality of first impulse signals from a network device, wherein the plurality of first impulse signals are separately sent by the network device to the terminal device on a plurality of antennas, a plurality of sending delays of sending times at which the network device separately sends the first impulse signals on the plurality of antennas relative to an initial sending time are different, and the initial sending time is a time at which an antenna that first sends the first impulse signal in the plurality of antennas sends the first impulse signal;
determining, by the terminal device, a first channel impulse response vector based on the plurality of first impulse signals;
determining, by the terminal device, a transmission feature of the first impulse signal based on the plurality of sending delays and the first channel impulse response vector; and
positioning, by the terminal device, the terminal device based on the transmission feature of the first impulse signal.

16. The method according to claim 15, wherein the transmission feature of the first impulse signal comprises one or two of an angle of departure and a channel delay of the first impulse signal.

17. The method according to claim 15 or 16, wherein determining, by the terminal device, the transmission feature of the first impulse signal based on the plurality of sending delays and the first channel impulse response vector comprises:
determining, by the terminal device based on the plurality of sending delays and the first channel impulse response vector, a plurality of first sub-channel impulse response vectors of the terminal device that correspond to the plurality of antennas; and
determining, by the terminal device, the transmission feature of the first impulse signal based on the plurality of first sub-channel impulse response vectors of the terminal device that correspond to the plurality of antennas.

18. The method according to any one of claims 15 to 17, wherein the method further comprises:
sending, by the terminal device, a second impulse signal to the network device.

19. The method according to any one of claims 15 to 18, wherein the method further comprises:
receiving, by the terminal device, the plurality of sending delays from the network device.

20. A positioning method, comprising:
determining, by a network device, a first impulse signal; and
separately sending, by the network device, the first impulse signals to a terminal device in an impulse receiving time window of the terminal device on a plurality of antennas, wherein a plurality of sending delays of sending times at which the first impulse signals are respectively sent on the plurality of antennas relative to an initial sending time are different, and the initial sending time is a time at which an antenna that first sends the first impulse signal in the plurality of antennas sends the first impulse signal.

21. The method according to claim 20, wherein before separately sending, by the network device, the first impulse signals to the terminal device in the impulse receiving time window of the terminal device on the plurality of antennas, the method further comprises:
determining, by the network device based on second channel impulse response vectors of second impulse signals respectively received by the plurality of antennas from the terminal device, times of strong-path delays respectively corresponding to the plurality of antennas; and
determining, by the network device, the plurality of sending delays based on the times of the strong-path delays respectively corresponding to the plurality of antennas.

22. The method according to claim 20, wherein before separately sending, by the network device, the first impulse signals to the terminal device in the impulse receiving time window of the terminal device on the plurality of antennas, the method further comprises:
receiving, by the network device, second impulse signals from the terminal device on the plurality of antennas; and
separately sending, by the network device, the first impulse signals to the terminal device in the impulse receiving time window of the terminal device on the plurality of antennas comprises:
determining, by the network device based on a first time at which any one of the plurality of antennas receives the second impulse signal, and feedback delays respectively corresponding to the plurality of antennas, second times at which the plurality of antennas respectively send the first impulse signals to the terminal device, wherein a maximum difference between the second times at which the plurality of antennas respectively send the first impulse signals to the terminal device is less than or equal to duration of the impulse receiving time window of the terminal device; and separately sending, by the network device, the first impulse signals to the terminal device on the plurality of antennas based on the second times at which the plurality of antennas respectively send the first impulse signals to the terminal device; or
determining, by the network device based on first times at which the plurality of antennas respectively receives the second impulse signals, and feedback delays respectively corresponding to the plurality of antennas, second times at which the plurality of antennas respectively send the first impulse signals to the terminal device, wherein a maximum difference between the second times at which the plurality of antennas respectively send the first impulse signals to the terminal device is less than or equal to duration of the impulse receiving time window of the terminal device; and separately sending, by the network device, the first impulse signals to the terminal device on the plurality of antennas based on the second times at which the plurality of antennas respectively send the first impulse signals to the terminal device.

23. The method according to any one of claims 20 to 22, wherein the method further comprises:
sending, by the network device, the plurality of sending delays to the terminal device.

24. A communication apparatus, comprising an interface unit and a processing unit, wherein
the interface unit is configured to receive and send data; and
the processing unit is configured to perform the method according to any one of claims 1 to 23 by using the interface unit.

25. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to perform the method according to any one of claims 1 to 23 by using a logic circuit or by executing instructions.

26. A computer program product, comprising instructions, wherein when the instructions are executed by a processor, the method according to any one of claims 1 to 23 is performed.

27. A chip system, wherein the chip system comprises a processor, the processor is configured to be coupled to a memory, the memory is configured to store a program or instructions, and when the program or the instructions are executed by the processor, the method according to any one of claims 1 to 23 is performed.

28. A computer-readable storage medium, wherein the storage medium stores a computer program or instructions, and when the computer program or the instructions are executed by a processor, the method according to any one of claims 1 to 23 is performed.
